# FASCICULE DE BREVET EUROPEEN

(11) **EP 0 537 059 B1**
(45) Date de publication et mention de la délivrance du brevet: **20.12.1995**
(21) Numéro de dépôt: 92402711.3
(22) Date de dépôt: 05.10.1992
(51) Int. Cl.: B60S 1/34

(54) **Essuie-glace à balayage non circulaire comportant des moyens de réglage de sa position de repos**
Scheibenwischer mit nichtkreisförmigen Wischfeld und Anordnung zur Steuerung seiner Ruhelage
Windscreen wiper with non-circular wiping pattern including means to adjust its rest-position

(30) Priorité: 09.10.1991 FR 9112435
(43) Date de publication de la demande: 14.04.1993
(73) Titulaire: PAUL JOURNEE S.A., F-92700 Colombes (FR)
(72) Inventeur: Journee, Maurice, F-60240 Reilly (FR); Jehannet, Jean-Pierre, F-27200 Vernon (FR)
(74) Mandataire: Lemaire, Marc

(56) Documents cités:
- EP-A- 0 182 123
- EP-A- 0 326 458
- DE-C- 4 032 762

## Description

La présente invention concerne un essuie-glace, notamment pour véhicule automobile.

Elle concerne plus particulièrement un essuie-glace du type comportant une tête d'entraînement d'un bras d'essuie-glace qui est entraînée en un mouvement alternatif de balayage par deux bielles dont les extrémités sont articulées sur la tête d'entraînement autour de deux axes sensiblement parallèles. Ce type d'essuie-glace est généralement dit à balayage non circulaire.

Dans un tel type d'essuie-glace, les autres extrémités des bielles d'entraînement sont reliées à un mécanisme d'entraînement, comportant notamment un moteur d'essuyage, qui est un ensemble monté sur la caisse du véhicule auquel on vient relier le bras d'essuie-glace, la tête d'entraînement et les deux bielles qui constituent un sous-ensemble.

Ce sous-ensemble peut être fabriqué et assemblé indépendamment du mécanisme d'entraînement, et notamment par un fabricant distinct.

Dans tous les cas, au moment du montage sur le véhicule, la précision des dimensions des différents composants du dispositif d'essuie-glace détermine la précision du montage et notamment la position qu'occupe le bras d'essuie-glace en position de repos.

Etant donné les dispersions dimensionnelles résultant de la fabrication en grande série et de la provenance de fournisseurs distincts, il s'est avéré que, dans la pratique, la position de repos de l'essuie-glace présentait de grandes variations qui nuisent à la fiabilité du fonctionnement de l'essuie-glace ainsi qu'à l'esthétique du véhicule, notamment lorsque l'essuie-glace est masqué en position de repos par une partie fixe de la carrosserie du véhicule.

Afin de remédier à cet inconvénient, l'invention propose un essuie-glace du type comportant une tête d'entraînement d'un bras d'essuie-glace qui est entrainée en un mouvement alternatif de balayage par deux bielles articulées par une de leurs extrémités sur la tête d'entraînement autour de deux axes sensiblement parallèles agencés dans un logement de la tête d'entraînement, conformément aux enseignements divulgués par le document DE-C-4 032 762, caractérisé en ce que ledit logement est délimité latéralement par une paroi qui comporte au moins une butée de réglage qui fait saillie transversalement hors du plan de la paroi pour coopérer avec une portion de surface en vis-à-vis d'une des bielles pour définir une position de repos de la tête d'entraînement.

Selon divers modes de réalisation de l'invention :
- la butée est réalisée sous la forme d'un élément amovible dont une partie de montage est reçue dans un orifice formé dans la paroi et dont une partie active fait saillie hors de l'orifice ;
- l'élément de butée est réalisé dans un matériau déformable élastiquement ;
- un organe déformable élastiquement est interposé entre le fond de l'orifice et la partie de montage de l'élément de butée ;
- l'organe est un ressort travaillant en compression ;
- la butée est un élément de longueur réglable ;
- la butée est constituée par la tête d'une vis dont le corps est vissé dans la paroi ;
- la paroi comporte une seconde butée qui coopère avec une autre portion de surface en vis-à-vis d'une bielle lorsque l'essuie-glace est en fin de course de balayage pour amortir la venue en contact éventuelle de la bielle avec la paroi ;
- la seconde butée est réalisée en matériau déformable élastiquement.

D'autres caractéristiques et avantages de l'invention apparaîtront à la lecture de la description qui va suivre, donnée à titre d'exemple non limitatif, pour la compréhension de laquelle on se reportera aux dessins annexés dans lesquels :
- la figure 1 est une vue schématique illustrant un véhicule automobile équipé d'un essuie-glace à balayage non circulaire en position de repos ;
- la figure 2 est une vue similaire à celle de la figure 1, l'essuie-glace étant représenté en position de fin de course, en course maximale , de balayage ;
- la figure 3 est une vue en coupe partielle de dessus de la tête d'entraînement réalisée conformément aux enseignements de l'invention ; et
- les figures 4 et 5 sont deux variantes de réalisation de la butée réglable.

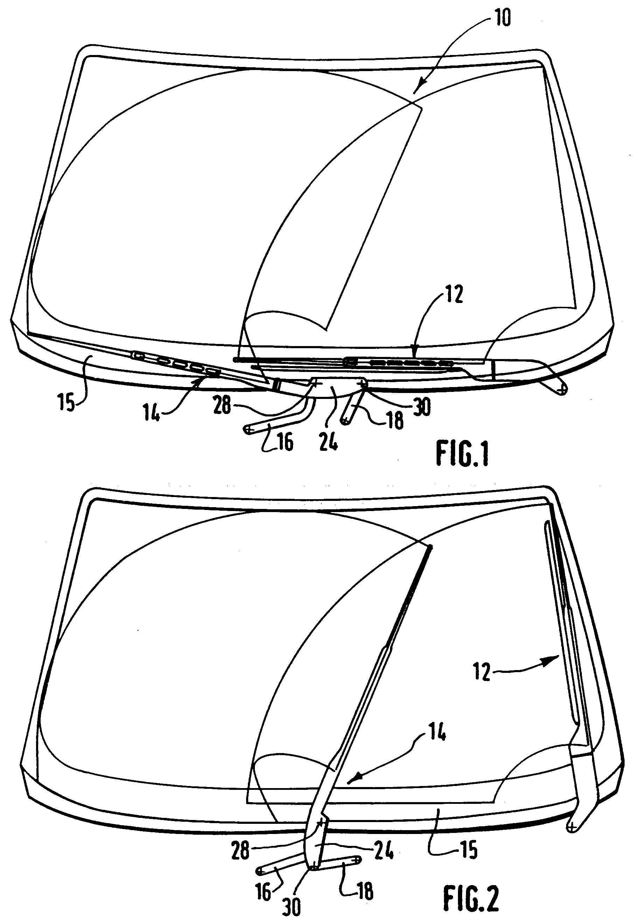

On reconnaît sur la figure 1 un pare-brise 10 dont l'essuyage est assuré au moyen d'un essuie-glace à balayage circulaire 12 et d'un essuie-glace à balayage non circulaire 14.

Les deux essuie-glaces sont illustrés à la figure 1 en position dite de repos dans laquelle ils s'étendent à la base du pare-brise, en général en regard d'une partie 15 de la carrosserie constituant la baie de pare-brise.

Les deux essuie-glaces sont illustrés à la figure 2 dans la position qu'ils occupent en fin de course de balayage alternatif et dans laquelle ils s'étendent selon une direction sensiblement perpendiculaire à la base du pare-brise.

Le mouvement de balayage de chaque essuie-glace est provoqué par un mécanisme d'entraînement (non représenté) auquel est relié l'essuie-glace associé.

Dans le cas de l'essuie-glace 14, cette liaison est assurée au moyen de deux bielles 16 et 18.

Les deux bielles s'étendent sensiblement parallèlement au plan de balayage dans lequel se déplace l'essuie-glace 14.

Chacune des bielles est reliée par l'une de ses extrémités 20,22 à la tête d'entraînement 24 de l'essuie-glace sur laquelle elles sont respectivement articulées autour de deux axes parallèles 28 et 30.

Les axes 28 et 30 sont également perpendiculaires à l'axe d'articulation X-X du balai d'essuie-glace 26 sur la tête d'entraînement 24.

La bielle 16 présente un profil coudé en L.

Conformément à l'invention, les axes d'articulation 28 et 30 sont agencés dans un logement 32 formé dans la tête d'entraînement 24.

Le logement est délimité par une paroi latérale 34 parallèle aux axes 28 et30 et qui comporte deux branches en forme de L 36 et 38.

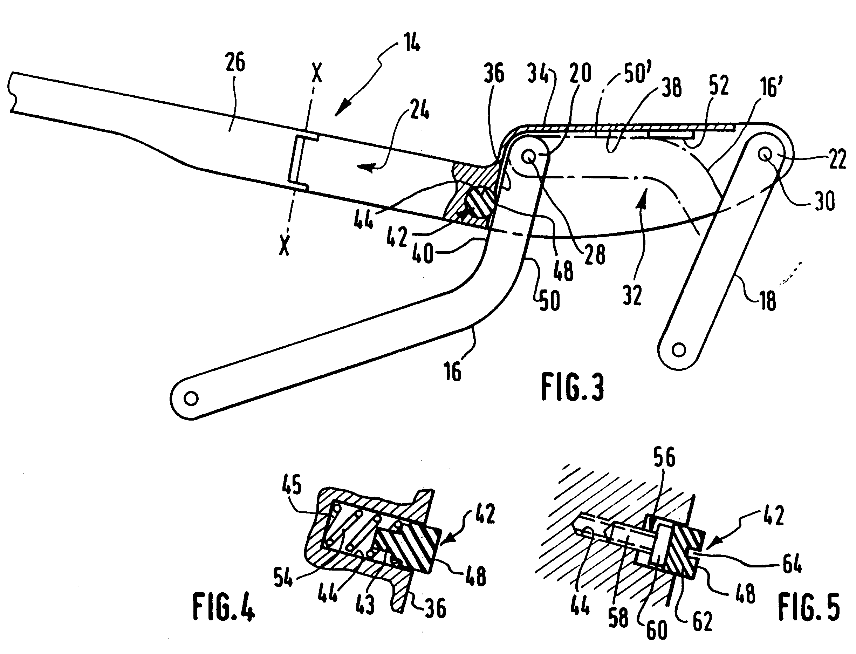

Dans la position de repos illustrée à la figure 3, le bord latéral 40 de la petite branche de la bielle 16 s'étend sensiblement parallèlement à la position 36 de la face interne de la paroi 34.

Conformément à l'invention, la position de repos de l'essuie-glace 14 est déterminée par un élément de butée 42.

Dans le premier mode de réalisation illustré à la figure 3, l'élément de butée 42 est réalisé sous la forme d'un pion, par exemple en matériau élastomère, dont une partie cylindrique ou partie de montage est montée dans un trou 44 de même diamètre formé dans la partie 36 de la paroi 34.

La paroi plane 34 intercepte le trou 44 de manière qu'une partie du pion 42 fasse saillie transversalement vers l'extérieur pour constituer une surface de butée 48 qui coopère avec la portion de surface 40 de la bielle 16.

La position de repos de la bielle 16 est ainsi parfaitement déterminée.

Pour la régler il suffit d'introduire un pion 42 dans l'orifice 44 dont la dimension de la partie en saillie permet d'obtenir le réglage désiré.

On a également représenté en silhouette la position 16′ qu'occupe la bielle 16 en fin de course de balayage.

Dans cette position 16′, le bord 50 opposé au bord latéral 40 de la bielle 16 occupe une position 50′ telle qu'il s'étend sensiblement parallèlement à la partie plane 35 de la face interne de la paroi 34.

En fonctionnement, et sous l'effet d'inertie du balai d'essuie-glace, il existe un risque que les surfaces 50′ et 38 viennent en contact et risquent de détériorer la cloison 34 et/ou de produire des bruits nuisant au confort des passagers.

Afin de remédier à cet inconvénient, il est prévu une butée en matériau élastomère 52, réalisée par exemple sous la forme d'une plaquette collée, qui constitue un amortisseur de choc en cas de contact.

Dans la variante illustrée à la figure 4, l'élément de butée 42 est réalisé sous la forme d'un pion étagé monté coulissant dans un trou cylindrique 44 perpendiculaire aux axes 28 et 30.

Un ressort hélicoïdal de compression 54 est interposé entre le fond 45 du trou 44 et l'élément 42 dont le petit étage 43 est reçu dans le ressort 54.

Le ressort 54 fait également ici fonction d'amortisseur de chocs en fonctionnement.

Dans la variante illustrée à la figure 5, l'élément de butée 42 est réglable.

A cet effet il comporte une vis 56 dont le corps fileté 58 est monté vissé dans un trou taraudé 44 et dont la tête 60 est équipée d'une plaquette 62 en matériau élastomère.

Le réglage est obtenu en provoquant la rotation de la vis 56 à l'aide par exemple de la fente 64 formée dans la plaquette 62.

## Revendications

1. Essuie-glace (14) du type comportant une tête d'entraînement (24) d'un bras d'essuie-glace (26) qui est entraînée en un mouvement alternatif de balayage par deux bielles (16,18) articulées par une de leurs extrémités (20,22) sur la tête d'entraînement (24) autour de deux axes sensiblement parallèles (28,30) agencés dans un logement (32) de la tête d'entraînement (24), caractérisé en ce que ledit logement est délimité latéralement par une paroi (34) qui comporte au moins une butée (42) de réglage qui fait saillie transversalement hors du plan de la paroi (34,36) pour coopérer avec une portion de surface en vis-à-vis (40) d'une des bielles (16) pour définir une position de repos de la tête d'entraînement (24).

2. Essuie-glace selon la revendication 1, caractérisé en ce que la butée (42) est réalisée sous la forme d'un élément amovible dont une partie de montage est reçue dans un orifice (44) formé dans la paroi (34,36) et dont une partie active fait saillie hors de l'orifice (44).

3. Essuie-glace selon la revendication 2, caractérisé en ce que l'élément de butée (42) est réalisé au moins partiellement dans un matériau déformable élastiquement.

4. Essuie-glace selon l'une des revendications 2 ou 3, caractérisé en ce qu'un organe déformable élastiquement (54) est interposé entre le fond (45) de l'orifice (44) et la partie de montage de l'élément de butée (42).

5. Essuie-glace selon la revendication 4, caractérisé en ce que ledit organe est un ressort (54) travaillant en compression.

6. Essuie-glace selon l'une quelconque des revendications précédentes, caractérisé en ce que la butée est un élément de longueur réglable (56).

7. Essuie-glace selon la revendication 6, caractérisé en ce que la butée est constituée par la tête (60,62) d'une vis (56) dont le corps (58) est vissé dans un trou (44) de la paroi (34,36).

8. Essuie-glace selon l'une quelconque des revendications précédentes, caractérisé en ce que la paroi (34,38) comporte une seconde butée (52) qui coopère avec une autre portion de surface en vis-à-vis (50) d'une bielle (16) lorsque l'essuie-glace est en fin de course de balayage pour amortir la venue en contact éventuelle de la bielle (16,50) avec la paroi (34,38).

9. Essuie-glace selon la revendication 8, caractérisé en ce que la seconde butée (52) est réalisée en matériau déformable élastiquement.

## Claims

1. A screen wiper (14) of the type comprising a drive head (24) for a screen wiper arm (26) which is driven in alternating wiping movement by two drive arms (16, 18), which are articulated at one of their ends (20, 22) on the drive head (24) about two substantially parallel axes (28, 30) located within a recess (32) in the drive head (24), characterised in that the said recess is bounded laterally by a wall (34) that includes at least one adjustable abutment (42), which projects transversely out of the plane of the wall (34, 36) in order to cooperate with a surface portion (40), in facing relationship with it, of one of the drive arms (16), so as to define a rest position for the drive head (24).

2. A screen wiper according to Claim 1, characterised in that the abutment (42) is made in the form of a removable element, having a mounting portion received in an aperture (44) which is formed in the wall (34, 36), and a working portion which projects out of the aperture (44).

3. A screen wiper according to Claim 2, characterised in that the abutment element (42) is made at least partially in a resiliently deformable material.

4. A screen wiper according to Claim 2 or Claim 3, characterised in that a resiliently deformable member (54) is interposed between the base (45) of the aperture (44) and the mounting portion of the abutment element (42).

5. A screen wiper according to Claim 4, characterised in that the said member is a spring (54) working in compression.

6. A screen wiper according to any one of the preceding Claims, characterised in that the abutment is an element of adjustable length (56).

7. A screen wiper according to Claim 6, characterised in that the abutment comprises the head (60, 62) of a screw (56), the body (58) of which is screwed into a hole (44) in the wall (34, 36).

8. A screen wiper according to any one of the preceding Claims, characterised in that the wall (34, 38) includes a second abutment (52) which cooperates with another surface portion (50), in facing relationship with it, of a drive arm (16) when the screen wiper is at the end of its wiping travel, so as to effect damping of any contact of the drive arm (16, 50) with the wall (34, 38).

9. A screen wiper according to Claim 8, characterised in that the second abutment (52) is made of resiliently deformable material.

## Patentansprüche

1. Scheibenwischer (14) in der Ausführung mit einem Antriebskopf (24) zu einem Scheibenwischerarm (26), der in einer Pendelwischbewegung durch zwei Stangen (16, 18) angetrieben wird, die mit einem ihrer Enden (20, 22) am Antriebskopf (24) um zwei in einer Aufnahme (32) des Antriebskopfes (24) angeordnete in etwa parallele Gelenkbolzen (28, 30) angelenkt sind , **dadurch gekennzeichnet,** daß die besagte Aufnahme seitlich durch eine Wand (34) begrenzt wird, die mindestens einen Verstellanschlag (42) umfaßt, der quer außerhalb der Ebene der Wand (34, 36) vorsteht, um mit einer gegenüberliegenden Teilfläche (40) einer der Stangen (16) zusammenzuwirken, um eine Ruhelage des Antriebskopfes (24) zu definieren.

2. Scheibenwischer nach Anspruch 1 , **dadurch gekennzeichnet,** daß der Anschlag (42) in Form eines abnehmbaren Elements ausgeführt ist, das mit einem Einbauteil in eine Öffnung (44) in der Wand (34, 36) eingesetzt ist und mit einem Arbeitsteil aus der Öffnung (44) heraus vorsteht.

3. Scheibenwischer nach Anspruch 2 , **dadurch gekennzeichnet,** daß der Anschlag (42) zumindest teilweise aus einem elastisch verformbaren Material ausgeführt ist.

4. Scheibenwischer nach einem der Ansprüche 2 oder 3, **dadurch gekennzeichnet,** daß ein elastisch verformbares Organ (54) zwischen dem Boden (45) der Öffnung (44) und dem Einbauteil des Anschlagelements (42) eingesetzt ist.

5. Scheibenwischer nach Anspruch 4 , **dadurch gekennzeichnet,** daß es sich bei dem Organ um eine Druckfeder (54) handelt.

6. Scheibenwischer nach einem der vorangehenden Ansprüche, **dadurch gekennzeichnet**, daß der Anschlag ein Element mit verstellbarer Länge (56) ist.

7. Scheibenwischer nach Anspruch 6 , **dadurch gekennzeichnet,** daß der Anschlag aus dem Kopf (60, 62) einer Schraube (56) besteht, deren Schaft (58) in eine Bohrung (44) der Wand (34, 36) eingeschraubt ist.

8. Scheibenwischer nach einem der vorangehenden Ansprüche , **dadurch gekennzeichnet**, daß die Wand (34, 38) einen zweiten Anschlag (52) umfaßt, der mit einer anderen gegenüberliegenden Teilfläche (50) einer Stange (16) zusammenwirkt, wenn sich der Scheibenwischer in Wischendstellung befindet, um das etwaige Anstoßen der Stange (16, 50) an der Wand (34, 38) zu dämpfen.

9. Scheibenwischer nach Anspruch 8 , **dadurch gekennzeichnet,** daß der zweite Anschlag (52) aus einem elastisch verformbaren Material ausgeführt ist.
